# EUROPEAN PATENT APPLICATION

(11) **EP 4 415 081 A1**
(43) Date of publication of application: **14.08.2024**
(21) Application number: 22878153.0
(22) Date of filing: 30.06.2022
(51) Int. Cl.: H01M 4/86, C04B 35/01, C25B 9/23, C25B 11/052, C25B 11/067, C25B 11/075, C25B 13/04, C25B 13/07, H01M 8/12, H01M 8/1253, H01M 8/126

(54) **ELECTRODE CATALYST, MEMBRANE ELECTRODE ASSEMBLY, ELECTROCHEMICAL CELL, AND FUEL CELL SYSTEM**

(30) Priority: 04.10.2021 JP 2021163752
(71) Applicant: Panasonic Holdings Corporation, Osaka 571-8501 (JP)
(72) Inventor: MIKAMI, Yuichi, Kadoma-shi, Osaka 571-0057 (JP); NUNOO, Kosuke, Kadoma-shi, Osaka 571-0057 (JP); KUROHA, Tomohiro, Kadoma-shi, Osaka 571-0057 (JP); OKUYAMA, Yuji, Miyazaki-shi, Miyazaki 889-2192 (JP)
(74) Representative: Grünecker Patent- und Rechtsanwälte PartG mbB
(86) International application number: PCT/JP2022/026321
(87) International publication number: WO 2023/058281

(57) **Abstract**

An electrode catalyst of the present disclosure includes a compound represented by the chemical formula BaₐZr_{1-x-y}YbₓFe_{y}O_{3-δ}, the chemical formula satisfying 0.95 ≤ a ≤ 1.05, 0 < x < 1,0 < y < 1, 0 < (x + y) < 1, and 0 < δ < 1.

## Description

### Technical Field

The present disclosure relates to an electrode catalyst, a membrane-electrode assembly, an electrochemical cell, and a fuel cell system.

### Background Art

For example, solid oxide fuel cells (hereinafter, written as "SOFCs") are known as a type of electrochemical cells that use an electrolyte material composed of a solid oxide. Oxide ion conductors, typically stabilized zirconia, are generally used widely as SOFC electrolyte materials. The oxide ion conductors exhibit a lower ion conductivity with decreasing temperature. Thus, SOFCs utilizing stabilized zirconia as an electrolyte material need to be operated at a temperature of, for example, higher than or equal to 700°C.

On the other hand, SOFCs using a proton conductive electrolyte material may be operated at, for example, about 500°C to 600°C. This is because protons are conducted with less activation energy than oxide ions, and the decrease in ion conductivity is small even at a low temperature. Thus, SOFCs using a proton conductive electrolyte material attract attention from the points of view of chemical stability of members and cost reduction.

Typical proton conductive electrolyte materials that are known are perovskite-type composite oxides represented by the chemical formula BaCe₁₋ₓMₓO_{3-α}, BaZr_{1-x-y}CeₓM_{y}O_{3-α} or BaZr₁₋ₓMₓO_{3-α} (for example, Patent Literature 1 and Patent Literature 2). In these chemical formulas, M is a trivalent substitution element. The value of α indicates the amount of oxygen deficiency. The values of x and y satisfy 0 < x < 1, 0 < y < 1, and 0 < (x + y) < 1.

Furthermore, Patent Literature 3 discloses a membrane-electrode assembly that includes an electrolyte having the composition BaZr₁₋ₓMₓO₃ (M is at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, 0 < x < 1, 0 < y < 1, and 0.95 ≤ a ≤ 1.05).

As described in, for example, Patent Literatures 1 to 3, proton conductive perovskite-type composite oxides are conventionally suggested as electrolyte materials for constituting SOFC electrolyte membranes.

Furthermore, Non Patent Literature 1 discloses Fe-doped BaZr_{0.9}Yb_{0.1}O_{3-d} as a proton conductive electrolyte material. Specifically, Non Patent Literature 1 discloses that BaZr_{0.9-x}Yb_{0.1}FeₓO_{3-d} (x = 0.2 or 0.4) functions as an excellent ion-electron conductor.

### Citation List

### Patent Literature

PTL 1: Japanese Patent No. 4583810
PTL 2: Japanese Patent No. 3733030
PTL 3: Japanese Unexamined Patent Application Publication No. 2020-068195 Non Patent Literature

NPL 1: Anna V. Kasyanova et al., "Transport properties of iron-doped BaZr0.9Yb0.1O3-d", Mendeleev Communications, 2019, 29, 710-712

### Summary of Invention

### Technical Problem

An object of the present disclosure is to provide an electrode catalyst that exhibits an excellent performance as an electrode.

### Solution to Problem

An electrode catalyst according to the present disclosure includes a compound represented by the chemical formula BaₐZr_{1-x-y}YbₓFe_{y}O_{3-δ}, the chemical formula satisfying 0.95 ≤ a ≤ 1.05, 0 < x < 1, 0 < y < 1, 0 < (x + y) < 1, and 0 < δ < 1.

### Advantageous Effects of Invention

The electrode catalyst provided according to the present disclosure exhibits an excellent performance as an electrode.

### Brief Description of Drawings

[Fig. 1A] Fig. 1A illustrates a sectional view of a membrane-electrode assembly according to embodiment 2.
[Fig. 1B] Fig. 1B illustrates a sectional view of an electrochemical cell according to embodiment 3.
[Fig. 2] Fig. 2 illustrates a fuel cell system according to embodiment 4.
[Fig. 3] Fig. 3 is a graph illustrating X-ray diffraction profiles of electrode catalysts of EXAMPLES 1 to 5.
[Fig. 4] Fig. 4 is a graph illustrating X-ray diffraction profiles of electrode catalysts of EXAMPLES 6 to 10.
[Fig. 5] Fig. 5 illustrates a Nyquist plot of an evaluation cell using the electrode catalyst of EXAMPLE 1.
[Fig. 6] Fig. 6 illustrates a Nyquist plot of an evaluation cell using an electrode catalyst of COMPARATIVE EXAMPLE 1.
[Fig. 7] Fig. 7 illustrates a Nyquist plot of an evaluation cell using an electrode catalyst of COMPARATIVE EXAMPLE 2.
[Fig. 8] Fig. 8 illustrates a Nyquist plot of an evaluation cell using an electrode catalyst of COMPARATIVE EXAMPLE 3.

### Description of Embodiments

### (Underlying Knowledge Forming Basis of Aspects of the Present Disclosure)

As a proton conductive material having excellent low-temperature sinterability, Patent Literature 1 describes a metal oxide with a perovskite-type structure that includes at least one transition metal of nickel, cobalt, chromium, manganese, and iron in a molar ratio of greater than or equal to 0.01 and less than or equal to 0.2. Patent Literature 1 describes that transition metals, such as nickel, are elements effective for enhancing low-temperature sinterability, chemical stability in a high-temperature region, denseness, and mechanical strength. Although not studied in Patent Literature 1, catalytic activity has been confirmed in some of the above transition metal elements themselves or in compounds containing such transition metal elements. For example, nickel is used as an SOFC fuel electrode.

As a proton conductive material, Patent Literature 2 provides an oxide with a perovskite-type structure represented by the chemical formula BaZr₁₋ₓMₓO₃₋ₚ. This material has high proton conductivity and high physical and chemical stability. Here, the chemical formula BaZr₁₋ₓMₓO₃₋ₚ satisfies 0 < x < 1, and 0 < p < 1.5. In the chemical formula BaZr₁₋ₓMₓO₃₋ₚ, M is a trivalent substitution element. The substitution element M is at least one element selected from La, Pr, Nd, Pm, Sm, Eu, Gd, Tb, Dy, Ho, Er, Tm, Yb, Y, Sc, Mn, Fe, Co, Ni, Al, Ga, and In. Although not studied in Patent Literature 2, catalytic activity has been confirmed in some of the elements described as exemplary substitution elements M, specifically, in some of the transition metal elements themselves or in compounds containing such transition metal elements. For example, nickel is used as an SOFC fuel electrode.

Patent Literature 3 discloses a membrane-electrode assembly that includes an electrolyte having the composition BaZr₁₋ₓMₓO₃ (M is at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, 0 < x < 1, 0 < y < 1, and 0.95 ≤ a ≤ 1.05).

However, Patent Literature 3 does not evaluate the performance of BaZr₁₋ₓMₓO₃ as an electrode catalyst and does not study whether this material has catalytic activity.

Non Patent Literature 1 discloses Fe-doped BaZr_{0.9}Yb_{0.1}O_{3-d} (x = 0.2 to 0.4) as a proton conductive electrolyte material. Non Patent Literature 1 evaluates ion-electron conductor performances, such as ion conductivity and electron conductivity, of the Fe-doped BaZr_{0.9}Yb_{0.1}O_{3-d} (x = 0.2 or 0.4). Specifically, Non Patent Literature 1 studies the availability of the Fe-doped BaZr_{0.9}Yb_{0.1}O_{3-d} (x = 0.2 or 0.4) as a material for SOFC electrolyte layers. However, Non Patent Literature 1 does not evaluate the performance of the Fe-doped BaZr_{0.9}Yb_{0.1}O_{3-d} as an electrode catalyst and does not study whether this material has catalytic activity.

Here, the present inventors extensively studied the materials disclosed in Patent Literature 1, Patent Literature 2, Patent Literature 3, and Non Patent Literature 1, and have consequently obtained the following finding. Specifically, the present inventors have found that the addition of transition element iron to the materials allows the materials to exhibit catalytic activity and to serve as electrode catalysts. Based on the finding, the present inventors have reached the present disclosure described hereinbelow.

### (Summary of Aspects of the Present Disclosure)

An electrode catalyst according to the first aspect of the present disclosure includes:
a compound represented by the chemical formula BaₐZr_{1-x-y}YbₓFe_{y}O_{3-δ},
the chemical formula satisfying 0.95 ≤ a ≤ 1.05, 0 < x < 1, 0 < y < 1, 0 < (x + y) < 1, and 0 < δ < 1.

The electrode catalyst according to the first aspect can exhibit an excellent performance as an electrode. In the electrode catalyst according to the first aspect, the compound represented by the chemical formula BaₐZr_{1-x-y}YbₓFe_{y}O_{3-δ} has proton conductivity. Thus, the electrode catalyst according to the first aspect may be suitably used in, for example, SOFCs using a proton conductive electrolyte material.

In the second aspect, for example, the electrode catalyst according to the first aspect may be such that the chemical formula satisfies x ≤ 0.5 and y ≥ 0.05.

The electrode catalyst according to the second aspect can exhibit a higher performance as an electrode.

In the third aspect, for example, the electrode catalyst according to the first or the second aspect may be such that the chemical formula satisfies x ≤ 0.25 and y ≥ 0.125.

The electrode catalyst according to the third aspect can exhibit a higher performance as an electrode.

In the fourth aspect, for example, the electrode catalyst according to any one of the first to the third aspect may be such that the chemical formula satisfies y > 0.4.

The electrode catalyst according to the fourth aspect can exhibit a higher performance as an electrode.

In the fifth aspect, for example, the electrode catalyst according to any one of the first to the fourth aspect may be such that the chemical formula satisfies y ≥ 0.5.

In the sixth aspect, for example, the electrode catalyst according to any one of the first to the fifth aspect may be such that the chemical formula satisfies y ≤ 0.9.

The electrode catalyst according to the sixth aspect can exhibit a higher performance as an electrode.

In the seventh aspect, for example, the electrode catalyst according to any one of the first to the sixth aspect may be such that the chemical formula satisfies y < 0.75.

The electrode catalyst according to the seventh aspect can exhibit a higher performance as an electrode.

In the eighth aspect, for example, the electrode catalyst according to any one of the first to the seventh aspect may be composed of the compound.

The electrode catalyst according to the eighth aspect can exhibit a higher performance as an electrode.

A membrane-electrode assembly according to the ninth aspect of the present disclosure includes:
a first electrode including, as an electrode catalyst, an oxide containing Ba, Zr, Yb, and Fe; and
an electrolyte membrane.

The membrane-electrode assembly according to the ninth aspect has excellent electrode characteristics.

In the tenth aspect, for example, the membrane-electrode assembly according to the ninth aspect may be such that the electrolyte membrane is disposed on a first main surface of the first electrode.

The membrane-electrode assembly according to the tenth aspect has excellent electrode characteristics.

In the eleventh aspect, for example, the membrane-electrode assembly according to the ninth or the tenth aspect may be such that the oxide includes a compound represented by the chemical formula BaₐZr_{1-x-y}YbₓFe_{y}O_{3-δ}, and the chemical formula satisfies 0.95 ≤ a ≤ 1.05, 0 < x < 1, 0 < y < 1, 0 < (x + y) < 1, and 0 < δ < 1.

The membrane-electrode assembly according to the eleventh aspect has higher electrode characteristics.

In the twelfth aspect, for example, the membrane-electrode assembly according to the eleventh aspect may be such that the chemical formula satisfies x ≤ 0.5 and y ≥ 0.05.

The membrane-electrode assembly according to the twelfth aspect has higher electrode characteristics.

In the thirteenth aspect, for example, the membrane-electrode assembly according to the eleventh or the twelfth aspect may be such that the chemical formula satisfies x ≤ 0.25 and y ≥ 0.125.

The membrane-electrode assembly according to the thirteenth aspect has higher electrode characteristics.

In the fourteenth aspect, for example, the membrane-electrode assembly according to any one of the eleventh to the thirteenth aspect may be such that the chemical formula satisfies y > 0.4.

The membrane-electrode assembly according to the fourteenth aspect has higher electrode characteristics.

In the fifteenth aspect, for example, the membrane-electrode assembly according to any one of the eleventh to the fourteenth aspect may be such that the chemical formula satisfies y ≥ 0.5.

The membrane-electrode assembly according to the fifteenth aspect has higher electrode characteristics.

In the sixteenth aspect, for example, the membrane-electrode assembly according to any one of the eleventh to the fifteenth aspect may be such that the chemical formula satisfies y ≤ 0.9.

The membrane-electrode assembly according to the sixteenth aspect has higher electrode characteristics.

In the seventeenth aspect, for example, the membrane-electrode assembly according to any one of the eleventh to the sixteenth aspect may be such that the chemical formula satisfies y ≤ 0.75.

The membrane-electrode assembly according to the seventeenth aspect has higher electrode characteristics.

In the eighteenth aspect, for example, the membrane-electrode assembly according to any one of the ninth to the seventeenth aspect may be such that the electrolyte membrane includes at least one selected from the group consisting of compounds represented by the chemical formula Baₐ₁Zr₁₋ₓ₁M1ₓ₁O_{3-δ1}, compounds represented by the chemical formula Baₐ₂Ce₁₋ₓ₂M2ₓ₂O_{3-δ2}, and compounds represented by the chemical formula Baₐ₃Zr_{1-x3-y3}Ceₓ₃M3_{y3}O_{3-δ3}, M1, M2, and M3 each include at least one selected from the group consisting of Pr, Nd, Pm, Sm, Eu, Gd, Tb, Dy, Ho, Er, Tm, Yb, Y, Sc, In, and Lu, and the chemical formulas satisfy 0.95 ≤ a1 ≤ 1.05, 0.95 ≤ a2 ≤ 1.05, 0.95 ≤ a3 ≤ 1.05, 0 < x1 < 1, 0 < x2 < 1,0 < x3 < 1,0 < y3 < 1,0 < δ1 < 1, 0 < δ2 < 1, and 0 < δ3 < 1.

The membrane-electrode assembly provided according to the eighteenth aspect is composed of the material having excellent proton conductivity as the electrolyte, and the electrode catalyst having excellent electrode characteristics.

In the nineteenth aspect, for example, the membrane-electrode assembly according to the eighteenth aspect may be such that M1 is Yb.

The membrane-electrode assembly according to the nineteenth aspect has excellent electrode characteristics.

An electrochemical cell according to the twentieth aspect includes the membrane-electrode assembly according to any one of the ninth to the nineteenth aspect, and a second electrode, the first electrode, the electrolyte membrane, and the second electrode being arranged in the order named.

In the electrochemical cell provided according to the twentieth aspect, the electrode has an excellent performance.

For example, an electrochemical cell according to the twenty-first aspect may be such that the second electrode in the electrochemical cell according to the twentieth aspect includes at least one selected from the group consisting of NiO and Ni.

In the electrochemical cell provided according to the twenty-first aspect, the electrodes have an excellent performance.

A fuel cell system according to the twenty-second aspect includes:
the electrochemical cell according to the twentieth or the twenty-first aspect;
an oxidant gas supply line; and
a raw material gas supply line, wherein
the first electrode is connected to the oxidant gas supply line, and
the second electrode is connected to the raw material gas supply line.

The fuel cell system according to the twenty-second aspect may function as a fuel cell having an excellent electrode activity at the air electrode.

An electric power generating method according to the twenty-third aspect includes supplying an oxidant gas to the oxidant gas supply line of the fuel cell system described in the twenty-second aspect, and supplying a raw material gas to the raw material gas supply line, thereby generating electric power.

The electric power generating method according to the twenty-third aspect can generate electric power using the fuel cell system according to the twenty-second aspect.

### (Embodiments of the Present Disclosure)

Embodiments of the present disclosure will be described hereinbelow with reference to the drawings.

### (Embodiment 1)

An electrode catalyst according to embodiment 1 includes a compound represented by the chemical formula BaₐZr_{1-x-y}YbₓFe_{y}O_{3-δ}. That is, the electrode catalyst according to the embodiment 1 includes a compound represented by the chemical formula BaₐZr_{1-x-y}YbₓFe_{y}O_{3-δ} as will be illustrated in EXAMPLE 1 to EXAMPLE 10 described later. Here, the chemical formula satisfies 0.95 ≤ a ≤ 1.05, 0 < x < 1, 0 < y < 1, 0 < (x + y) < 1, and 0 < δ < 1. The electrode catalyst according to the embodiment 1 can attain a low reaction resistance at a temperature of, for example, 600°C. Thus, the electrode catalyst according to the embodiment 1 can function as an electrode catalyst that may be used in, for example, an SOFC electrode. The electrode catalyst according to the embodiment 1 may be such that the chemical formula satisfies 0 < δ < 0.5. The electrode catalyst according to the embodiment 1 may be such that the chemical formula satisfies a = 0.97 or a = 1.

The electrode catalyst according to the embodiment 1 may have a reaction resistance of, for example, less than or equal to 4 Ωcm² at 600°C. When the electrode catalyst according to the embodiment 1 has such a low reaction resistance, the electrode catalyst according to the embodiment 1 can exhibit an excellent performance as an electrode.

The compound represented by the chemical formula BaₐZr_{1-x-y}YbₓFe_{y}O_{3-δ} has proton conductivity. Thus, when, for example, the electrode catalyst according to the embodiment 1 is used in an air electrode of an SOFC in which an electrolyte membrane includes a proton conductive electrolyte material, useful reaction fields may be created not only at the contact face among the air electrode, the electrolyte membrane, and oxygen (that is, at the air electrode-electrolyte membrane-oxygen three-phase interface) but also at the contact face between the air electrode and oxygen (that is, at the air electrode-oxygen two-phase interface). Thus, the electrode catalyst according to the embodiment 1 can exhibit an excellent performance as an electrode when the electrode catalyst is used in, for example, an electrode of an SOFC in which an electrolyte membrane includes a proton conductive electrolyte material.

For example, the electrode catalyst according to the embodiment 1 may include the compound represented by the chemical formula BaₐZr_{1-x-y}YbₓFe_{y}O_{3-δ} in a molar ratio of greater than or equal to 30% or in a molar ratio of greater than or equal to 50%. When the electrode catalyst according to the embodiment 1 includes the compound represented by the chemical formula BaₐZr_{1-x-y}YbₓFe_{y}O_{3-δ} in the above range, the electrode catalyst according to the embodiment 1 can exhibit a higher performance as an electrode.

The compound represented by the chemical formula BaₐZr_{1-x-y}YbₓFe_{y}O_{3-δ} may satisfy x ≤ 0.5 and y ≥ 0.05.

As will be illustrated in EXAMPLE 1 to EXAMPLE 10 described later, the electrode catalyst that includes a compound represented by the chemical formula BaₐZr_{1-x-y}YbₓFe_{y}O_{3-δ} in which x ≤ 0.5 and y ≥ 0.05 can attain a lower value of reaction resistance than 7.21 Ωcm², the value of reaction resistance of Fe-free BaZr_{0.8}Yb_{0.2}O_{3-δ} (that is, can attain a lower value of reaction resistance than the value of reaction resistance in COMPARATIVE EXAMPLE 2 described later). Thus, such an electrode catalyst will be able to exhibit an excellent performance as an electrode.

The compound represented by the chemical formula BaₐZr_{1-x-y}YbₓFe_{y}O_{3-δ} may satisfy x ≤ 0.25 and y ≥ 0.125.

As will be illustrated in EXAMPLE 1, and EXAMPLE 3 to EXAMPLE 7 described later, the electrode catalyst that includes a compound represented by the chemical formula BaₐZr_{1-x-y}YbₓFe_{y}O_{3-δ} in which x ≤ 0.25 and y ≥ 0.125 may be composed of the compound as a single compound. In other words, the electrode catalyst that includes such a compound satisfying x ≤ 0.25 and y ≥ 0.125 can attain a lower value of reaction resistance than 0.49 Ωcm², the value of reaction resistance of La_{0.6}Sr_{0.4}Co_{0.2}Fe_{0.8}O_{3-δ} generally used as an SOFC electrode catalyst (that is, can attain a lower value of reaction resistance than the value of reaction resistance in COMPARATIVE EXAMPLE 4 described later). Thus, such an electrode catalyst will be able to exhibit a higher performance as an electrode.

The electrode catalyst according to the embodiment 1 may include an additional component in addition to the compound represented by the chemical formula BaₐZr_{1-x-y}YbₓFe_{y}O_{3-δ}. For example, the electrode catalyst according to the embodiment 1 may further include such additional components as impurities (for example, BaCO₃, ZrO₂, or Yb₂O₃) occurring in the process of synthesizing the compounds of EXAMPLE 1 to EXAMPLE 10.

The compound represented by the chemical formula BaₐZr_{1-x-y}YbₓFe_{y}O_{3-δ} may satisfy y > 0.4. The electrode catalyst that includes a compound represented by the chemical formula BaₐZr_{1-x-y}YbₓFe_{y}O_{3-δ} in which y > 0.4 can attain a lower value of reaction resistance. Thus, such an electrode catalyst will be able to exhibit a higher performance as an electrode.

The compound represented by the chemical formula BaₐZr_{1-x-y}YbₓFe_{y}O_{3-δ} may satisfy y ≥ 0.5. The electrode catalyst that includes a compound represented by the chemical formula BaₐZr_{1-x-y}YbₓFe_{y}O_{3-δ} in which y ≥ 0.5 can attain a lower value of reaction resistance. Thus, such an electrode catalyst will be able to exhibit a higher performance as an electrode.

The compound represented by the chemical formula BaₐZr_{1-x-y}YbₓFe_{y}O_{3-δ} may satisfy y ≤ 0.9. The electrode catalyst that includes a compound represented by the chemical formula BaₐZr_{1-x-y}YbₓFe_{y}O_{3-δ} in which y ≤ 0.9 can attain a lower value of reaction resistance. Thus, such an electrode catalyst will be able to exhibit a higher performance as an electrode.

The compound represented by the chemical formula BaₐZr_{1-x-y}YbₓFe_{y}O_{3-δ} may satisfy y ≤ 0.75. The electrode catalyst that includes a compound represented by the chemical formula BaₐZr_{1-x-y}YbₓFe_{y}O_{3-δ} in which y ≤ 0.75 can attain a lower value of reaction resistance. Thus, such an electrode catalyst will be able to exhibit a higher performance as an electrode.

The electrode catalyst according to the embodiment 1 may be composed of the compound represented by the chemical formula BaₐZr_{1-x-y}YbₓFe_{y}O_{3-δ}. The electrode catalyst provided according to this configuration is free from byproduct phases.

The phrase "the electrode catalyst according to the embodiment 1 is composed of the compound represented by the chemical formula BaₐZr_{1-x-y}YbₓFe_{y}O_{3-δ}" means that the compound represented by the chemical formula BaZr_{1-x-y}YbₓFe_{y}O_{3-δ} represents a molar ratio of greater than or equal to 90% of the electrode catalyst according to the embodiment 1. When the electrode catalyst according to the embodiment 1 is composed of the compound represented by the chemical formula BaₐZr_{1-x-y}YbₓFe_{y}O_{3-δ}, the electrode catalyst according to the embodiment 1 can exhibit a higher performance as an electrode.

As described hereinabove, the electrode catalyst according to the embodiment 1 is an electrode catalyst that may be suitably used in an air electrode of an SOFC particularly when an electrolyte membrane includes a proton conductive electrolyte material. The electrode catalyst according to the embodiment 1, however, may also be used as a material for an electrode in an SOFC in which an electrolyte material used in an electrolyte membrane is an oxide ion conductor.

### (Embodiment 2)

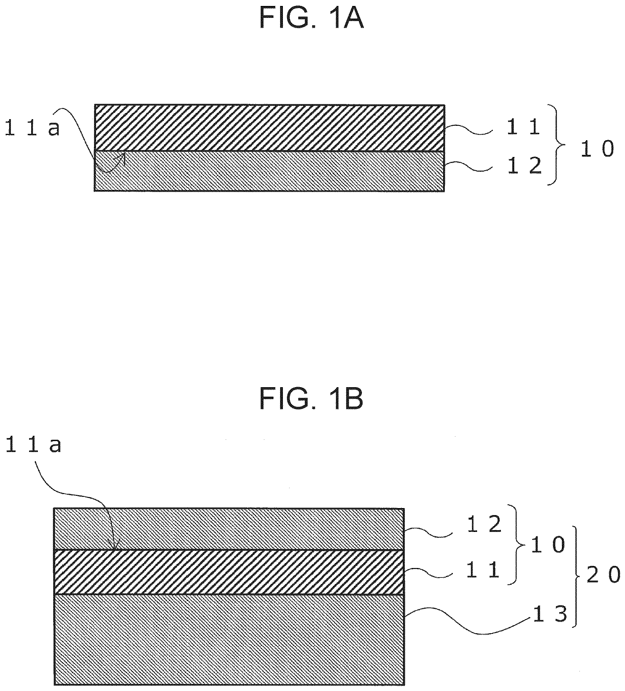

Fig. 1A illustrates a sectional view of a membrane-electrode assembly 10 according to embodiment 2. The membrane-electrode assembly 10 includes an electrolyte membrane 11 and a first electrode 12. The first electrode 12 includes, as an electrode catalyst, an oxide containing Ba, Zr, Yb, and Fe. For example, the electrolyte membrane 11 is provided on a first main surface 12a of the first electrode 12.

The oxide containing Ba, Zr, Yb, and Fe advantageously has a relatively low reaction resistance, and hence can function as an electrode catalyst. Thus, the membrane-electrode assembly 10 provided according to the above configuration includes an electrode catalyst having excellent electrode characteristics.

For example, the oxide contained in the first electrode 12 may include the electrode catalyst according to the first embodiment. That is, the oxide contained in the first electrode 12 may include a compound represented by the chemical formula BaₐZr_{1-x-y}YbₓFe_{y}O_{3-δ}. The chemical formula satisfies 0.95 ≤ a ≤ 1.05, 0 < x < 1, 0 < y < 1, 0 < (x + y) < 1, and 0 < δ < 1. The electrode catalyst according to the first embodiment can exhibit a higher performance as an electrode. Thus, the membrane-electrode assembly 10 provided according to the above configuration benefits from higher electrode characteristics of the electrode catalyst.

The compound represented by the chemical formula BaₐZr_{1-x-y}YbₓFe_{y}O_{3-δ} may satisfy x ≤ 0.5 and y ≥ 0.05. The electrode catalyst that includes a compound represented by the chemical formula BaₐZr_{1-x-y}YbₓFe_{y}O_{3-δ} in which x ≤ 0.5 and y ≥ 0.05 can attain a lower value of reaction resistance. Thus, such an electrode catalyst will be able to exhibit a higher performance as an electrode. Thus, the membrane-electrode assembly 10 provided according to the above configuration benefits from higher electrode characteristics of the electrode catalyst.

The compound represented by the chemical formula BaₐZr_{1-x-y}YbₓFe_{y}O_{3-δ} may satisfy x ≤ 0.25 and y ≥ 0.125. The electrode catalyst that includes a compound represented by the chemical formula BaₐZr_{1-x-y}YbₓFe_{y}O_{3-δ} in which x ≤ 0.25 and y _> 0.125 can attain a lower value of reaction resistance. Thus, such an electrode catalyst will be able to exhibit a higher performance as an electrode. Thus, the membrane-electrode assembly 10 provided according to the above configuration benefits from higher electrode characteristics of the electrode catalyst.

The compound represented by the chemical formula BaₐZr_{1-x-y}YbₓFe_{y}O_{3-δ} may satisfy y > 0.4. The electrode catalyst that includes a compound represented by the chemical formula BaₐZr_{1-x-y}YbₓFe_{y}O_{3-δ} in which y > 0.4 can attain a lower value of reaction resistance. Thus, such an electrode catalyst will be able to exhibit a higher performance as an electrode. Thus, the membrane-electrode assembly 10 provided according to the above configuration benefits from higher electrode characteristics of the electrode catalyst.

The compound represented by the chemical formula BaₐZr_{1-x-y}YbₓFe_{y}O_{3-δ} may satisfy y ≥ 0.5. The electrode catalyst that includes a compound represented by the chemical formula BaZr_{1-x-y}YbₓFe_{y}O_{3-δ} in which y ≥ 0.5 can attain a lower value of reaction resistance. Thus, such an electrode catalyst will be able to exhibit a higher performance as an electrode. Thus, the membrane-electrode assembly 10 provided according to the above configuration benefits from higher electrode characteristics of the electrode catalyst.

The compound represented by the chemical formula BaₐZr_{1-x-y}YbₓFe_{y}O_{3-δ} may satisfy y ≤ 0.9. The electrode catalyst that includes a compound represented by the chemical formula BaₐZr_{1-x-y}YbₓFe_{y}O_{3-δ} in which y ≤ 0.9 can attain a lower value of reaction resistance. Thus, such an electrode catalyst will be able to exhibit a higher performance as an electrode. Thus, the membrane-electrode assembly 10 provided according to the above configuration benefits from higher electrode characteristics of the electrode catalyst.

The compound represented by the chemical formula BaₐZr_{1-x-y}YbₓFe_{y}O_{3-δ} may satisfy y ≤ 0.75. The electrode catalyst that includes a compound represented by the chemical formula BaₐZr_{1-x-y}YbₓFe_{y}O_{3-δ} in which y ≤ 0.75 can attain a lower value of reaction resistance. Thus, such an electrode catalyst will be able to exhibit a higher performance as an electrode. Thus, the membrane-electrode assembly 10 provided according to the above configuration benefits from higher electrode characteristics of the electrode catalyst.

For example, the electrolyte membrane 11 is composed of an electrolyte material having proton conductivity (that is, a proton conductor). Examples of the proton conductors include compounds represented by the chemical formula Baₐ₁Zr₁₋ₓ₁M1ₓ₁O_{3-δ1}, compounds represented by the chemical formula Baₐ₂Ce₁₋ₓ₂M2ₓ₂O_{3-δ2}, and compounds represented by the chemical formula Baₐ₃Zr_{1-x3-y3}Ceₓ₃M3_{y3}O_{3-δ3}. Here, M1, M2, and M3 each include at least one selected from the group consisting of Pr, Nd, Pm, Sm, Eu, Gd, Tb, Dy, Ho, Er, Tm, Yb, Y, Sc, In, and Lu, and the chemical formulas satisfy 0.95 ≤ a1 ≤ 1.05, 0.95 ≤ a2 ≤ 1.05, 0.95 ≤ a3 ≤ 1.05, 0 < x1 < 1, 0 < x2 < 1,0 < x3 < 1, 0 < y3 < 1, 0 < δ1 < 0.5, 0 < δ2 < 0.5, and 0 < δ3 < 0.5. The proton conductors are not limited to those described above. For example, the electrolyte membrane 11 in the membrane-electrode assembly 10 according to the embodiment 2 includes at least one selected from the group consisting of compounds represented by the chemical formula Baₐ₁Zr₁₋ₓ₁M1ₓ₁O_{3-δ1}, compounds represented by the chemical formula Baₐ₂Ce₁₋ₓ₂M2ₓ₂O_{3-δ2}, and compounds represented by the chemical formula Baₐ₃Zr_{1-x3-y3}Ceₓ₃M3_{y3}O_{3-δ3}.

The membrane-electrode assembly 10 provided according to the above configuration is composed of a highly proton conductive material as the electrolyte, and the electrode catalyst having excellent electrode characteristics.

In the compound represented by the chemical formula BaₐZr₁₋ₓ₁M1ₓ₁O_{3-δ1}, M1 may be Yb.

The electrolyte membrane 11 may include a proton conductive material as described above, or may include an oxide ion conductor. Examples of the oxide ion conductors include yttria-stabilized zirconia, scandia-stabilized zirconia, gadolinium-doped ceria, and lanthanum strontium gallium magnesium composite oxide.

For example, the thickness of the electrolyte membrane 11 is 1 to 500 µm, and may be 1 to 50 µm.

As described hereinabove, the first electrode 12 may include the electrode catalyst described in the embodiment 1. With this configuration, the membrane-electrode assembly 10 according to the embodiment 2 can attain excellent electrode activity. The first electrode 12 may be composed solely of the electrode catalyst described in the embodiment 1, or may be composed of, for example, a mixture of the electrode catalyst according to the embodiment 1, and a metal or a metal oxide.

For example, the first electrode 12 has a thickness of 1 to 1000 µm. When the first electrode 12 also serves as a cell support, the thickness of the first electrode 12 may be 100 µm to 1000 µm. When the cell support is a member other than the first electrode 12, the thickness of the first electrode 12 may be 1 to 100 µm or may be 5 to 50 µm.

The electrode catalyst described in the embodiment 1 has proton conductivity. Thus, when the first electrode 12 includes the electrode catalyst described in the embodiment 1 and the electrolyte membrane 11 includes a proton conductor, the membrane-electrode assembly 10 according to the embodiment 2 may be used as an air electrode and an electrolyte membrane in an SOFC in which the electrolyte membrane includes the proton conductive electrolyte material. When such a membrane-electrode assembly 10 is used as an air electrode and an electrolyte membrane in an SOFC, useful reaction fields may be created in the SOFC not only at the contact face among the air electrode, the electrolyte membrane, and oxygen (that is, at the air electrode-electrolyte membrane-oxygen three-phase interface) but also at the contact face between the air electrode and oxygen (that is, at the air electrode-oxygen two-phase interface). Thus, the membrane-electrode assembly 10 according to the embodiment 2 can enhance the performance of an SOFC when the electrolyte membrane includes a proton conductive electrolyte material.

While Fig. 1A illustrates the electrolyte membrane 11 and the first electrode 12 as being in contact with each other, an additional layer may be provided between the electrolyte membrane 11 and the first electrode 12. For example, such an additional layer may be a functional layer. The functional layer is a layer that promotes the transfer of electrons or protons between the electrolyte membrane 11 and the first electrode 12. For example, the functional layer is composed of a composite of a cermet and a composite oxide.

For example, the electrolyte membrane 11 is produced by a tape casting method, a spin coating method, a dip coating method, sputtering, or PLD (pulse laser deposition).

### (Embodiment 3)

Fig. 1B illustrates a sectional view of an electrochemical cell 20 according to embodiment 3.

The electrochemical cell 20 according to the embodiment 3 includes a membrane-electrode assembly 10 and a second electrode 13. That is, the electrochemical cell 20 includes a first electrode 12, an electrolyte membrane 11, and a second electrode 13.

The membrane-electrode assembly 10 is described in the embodiment 3.

In the electrochemical cell 20, as illustrated in Fig. 1B, the first electrode 12, the electrolyte membrane 11, and the second electrode 13 are arranged in the order named. That is, the electrolyte membrane 11 is sandwiched between the first electrode 12 and the second electrode 13. In other words, the electrolyte membrane 11 is provided between the first electrode 12 and the second electrode 13.

As a result of the above configuration, the electrochemical cell 20 according to the embodiment 3 can attain excellent electrode activity.

As described in the embodiment 3, the first electrode 12 in the membrane-electrode assembly 10 may be an air electrode. That is, the second electrode 13 may be a fuel electrode. When the second electrode 13 functions as a fuel electrode, the second electrode 13 includes, for example, a metal oxide. For example, the second electrode 13 principally includes nickel oxide. For example, the second electrode 13 may be formed on the membrane-electrode assembly 10 by a screen printing method. When the second electrode 13 functions as a fuel electrode, the second electrode 13 includes, for example, at least one selected from the group consisting of metals and metal oxides. For example, the second electrode 13 includes at least one selected from the group consisting of nickel (that is, Ni) and nickel oxide (that is, NiO). The electrochemical cell 20 provided according to this configuration can attain an excellent fuel electrode performance.

For example, the second electrode 13 may be formed on the membrane-electrode assembly 10 by a tape casting method, a spin coating method, a dip coating method, sputtering, PLD, or a screen printing method.

While Fig. 1B illustrates the second electrode 13 and the electrolyte membrane 11 as being in contact with each other, the arrangement is not limited thereto and an additional layer may be provided between the second electrode 13 and the electrolyte membrane 11.

For example, such an additional layer may be a functional layer. The functional layer is described in the embodiment 2.

The electrochemical cell 20 may be used in a fuel cell, an electrochemical hydrogen pump, a hydrogen sensor, and a water electrolyzer.

### (Embodiment 4)

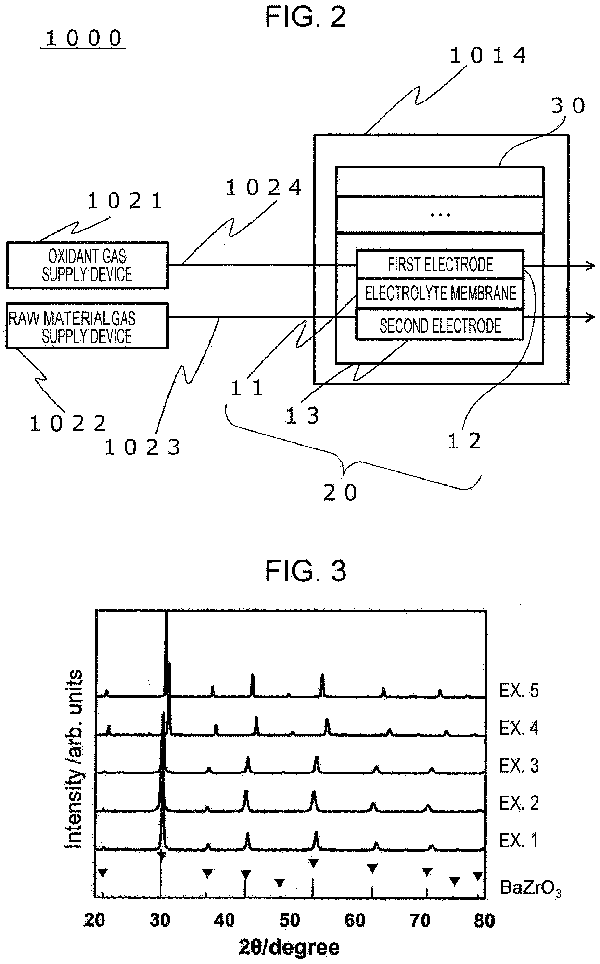

Fig. 2 schematically illustrates a fuel cell system 1000 according to embodiment 4.

The fuel cell system 1000 includes an electrochemical cell 20. The electrochemical cell 20 is described in the embodiment 3.

In the fuel cell system 1000 according to the embodiment 4, the electrochemical cell 20 is used as a fuel cell. Thus, in this case, the first electrode 12 functions as an air electrode, and the second electrode 13 functions as a fuel electrode.

The fuel cell system 1000 further includes an oxidant gas supply line 1024 and a raw material gas supply line 1023. The oxidant gas supply line 1024 is connected to the first electrode 12 and an oxidant gas supply device 1021. The raw material gas supply line 1023 is connected to the second electrode 13 and a raw material supply device 1022.

The electrochemical cells 20 are stacked to form a stack 30. The stack 30 thus obtained is stored in a housing 1014.

The housing 1014 may be composed of a thermally insulating member. An oxidant gas is supplied to the first electrodes 12 in the stacked electrochemical cells 20.

Specifically, an oxidant gas is supplied from the oxidant gas supply device 1021 through the oxidant gas supply line 1024 to the first electrodes 12 (that is, the cathodes) in the electrochemical cells 20.

At the first electrode 12, the following reaction (1) proceeds:

O₂ + 4H⁺ + 4e⁻ → 2H₂O (1)

For example, the oxidant gas is air.

A raw material is supplied from the raw material supply device 1022 through the raw material gas supply line 1023 to the second electrodes 13 in the electrochemical cells 20.

At the second electrode 13, the following reaction (2) proceeds:

2H₂ - 4H⁺ + 4e⁻ (2)

For example, the raw material is hydrogen molecules.

Hydrogen may be produced by a reforming reaction. Alternatively, hydrogen may be produced by water electrolysis.

The fuel cell system 1000 is operated as described above, and the fuel cell system 1000 generates electric power.

The fuel cell system 1000 according to the embodiment 4 may function as a fuel cell that has excellent electrode activity at the air electrodes.

An electric power generating method using the fuel cell system 1000 according to the embodiment 4 includes, for example, supplying an oxidant gas to the oxidant gas supply line 1024 of the fuel cell system 1000, and supplying a raw material gas to the raw material gas supply line 1023, thereby generating electric power.

### EXAMPLES

Hereinbelow, the present disclosure will be described in greater detail with reference to the following EXAMPLES and COMPARATIVE EXAMPLES. In EXAMPLES and COMPARATIVE EXAMPLES, electrode catalysts, membrane-electrode assemblies including the electrodes, and electrochemical cells including the membrane-electrode assemblies were produced as described below. The crystal structures of the electrode catalysts were analyzed, and characteristics of the membrane-electrode assemblies and the electrochemical cells were evaluated.

### [EXAMPLE 1]

### (Preparation of electrode catalyst)

An electrode catalyst was synthesized by a complex polymerization method. The synthesis started with preparing solutions. An electrode catalyst was synthesized using the solutions prepared.

### (1) Preparation of solutions

### (a) Zr solution

A Zr solution was prepared using the following material.

·ZrO(NO₃)₂·2H₂O (240 g, manufactured by KANTO CHEMICAL CO., INC.)

The above material was added to a polyethylene container containing 1800 mL of distilled water. Next, the distilled water containing the material was stirred sufficiently. A Zr solution was thus obtained. The concentration of Zr ions in the solution was calculated using inductively coupled plasma atomic emission spectroscopy (hereinafter, ICP-AES). The ICP-AES analyzer that was used was "iCAP7400 Duo" manufactured by Thermo Fisher Scientific K.K. As a result of the analysis, the concentration of Zr in the Zr solution was 0.49 mol/L.

### (b) Yb solution

A Yb solution was prepared using the following materials.
·Yb(NO₃)₃·5H₂O (300 g, manufactured by Kojundo Chemical Laboratory Co., Ltd.)
·C₆H₈O₇·H₂O (300 g, manufactured by KANTO CHEMICAL CO., INC.)

The above materials were added to a polyethylene container containing 500 mL of distilled water. Next, the distilled water containing the materials was stirred sufficiently. A Yb solution was thus obtained. The concentration of Yb ions in the solution was calculated using ICP-AES in the same manner as the calculation of the concentration of Zr ions in the Zr solution described in (a) above. As a result, the concentration of Yb in the Yb solution was 0.91 mol/L. The concentration of citric acid (namely, C₆H₈O₇) in the solution was calculated to be 2.84 mol/L based on the ratio of the amount added of C₆H₈O₇·H₂O to the amount added of distilled water.

### (c) Fe solution

An Fe solution was prepared using the following materials.
·Fe(NO₃)₃·9H₂O (300 g, manufactured by KANTO CHEMICAL CO., INC.)
·C₆H₈O₇·H₂O (300 g, manufactured by KANTO CHEMICAL CO., INC.)

The above materials were added to a polyethylene container containing 500 mL of distilled water. Next, the distilled water containing the materials was stirred sufficiently. An Fe solution was thus obtained. The concentration of Fe ions in the solution was calculated using ICP-AES in the same manner as the calculation of the concentration of Zr ions in the Zr solution described in (a) above. As a result, the concentration of Fe in the Fe solution was 0.88 mol/L. The concentration of citric acid (namely, C₆H₈O₇) in the solution was calculated to be 2.84 mol/L based on the ratio of the amount added of C₆H₈O₇·H₂O to the amount added of distilled water.

### (d) Citric acid solution

A citric acid solution was prepared using the following material.
·C₆H₈O₇·H₂O (1200 g, manufactured by KANTO CHEMICAL CO., INC.)

The above material was added to a polyethylene container containing 2000 mL of distilled water. Next, the distilled water containing the material was stirred sufficiently. A citric acid solution was thus obtained. The concentration of citric acid (namely, C₆H₈O₇) in the solution was calculated to be 2.84 mol/L based on the ratio of the amount added of C₆H₈O₇·H₂O to the amount added of distilled water.

### (2) Synthesis of electrode catalyst

An electrode catalyst of EXAMPLE 1 was synthesized using the solutions prepared as described above. The following materials and solutions were used for the synthesis of the electrode catalyst of EXAMPLE 1.
·BaCO₃ (0.05 mol, manufactured by KANTO CHEMICAL CO., INC.)
·C₆H₈O₇·H₂O (0.227 mol, manufactured by KANTO CHEMICAL CO., INC.)
·Zr solution (38.3 mL; amount of Zr = 0.0188 mol)
·Yb solution (6.87 mL; amount of Yb = 0.0063 mol, amount of citric acid = 0.020 mol)
·Fe solution (28.4 mL; amount of Fe = 0.025 mol, amount of citric acid = 0.081 mol)
·Citric acid solution (60.9 mL; amount of citric acid = 0.173 mol)
·Ethylene glycol (2 mol)

First, citric acid monohydrate (namely, C₆H₈O₇·H₂O) was added to a 1 L beaker. Next, 80 mL of distilled water was added to the 1 L beaker, and the mixture was stirred with a stirrer. Thus, a colorless and transparent first aqueous solution was obtained. ·BaCO₃ was added to the colorless and transparent first aqueous solution obtained. The mixture was stirred with a stirrer to completely dissolve BaCO₃. Thus, a colorless and transparent second aqueous solution was obtained. While continuing stirring of the colorless and transparent second aqueous solution obtained, the Zr solution, the Yb solution, the Fe solution, and the citric acid solution were added in the amounts described above to the colorless and transparent second aqueous solution using a pipettor. Furthermore, ethylene glycol was also added to the colorless and transparent second aqueous solution. A mixture solution was thus obtained.

The mixture solution obtained was continuously stirred with a stirrer. The mixture solution obtained was heated to about 90°C using a mantle heater. Consequently, water was evaporated from the mixture solution. The mixture solution was further heated to about 130°C, and ethylene glycol was removed by evaporation to accelerate the polymerization and to concentrate the system. Heating was stopped when the amount of the solution decreased to 100 mL. A liquid concentrate was thus obtained. The liquid concentrate obtained was transferred to an alumina crucible and was allowed to cool. Next, heating was performed in a dryer at 120°C for 6 hours. Consequently, ethylene glycol was removed from the liquid concentrate. Subsequently, the alumina crucible containing the liquid concentrate free from ethylene glycol was preheated in the air at 500°C for 3 hours. As a result, organic components were removed. A solid was thus obtained. Subsequently, the solid obtained was crushed in a mortar to give a preheated powder. Subsequently, the preheated powder was added to an alumina crucible and was heat-treated in an air atmosphere at 1100°C for 2 hours. The solid obtained was crushed in a mortar. An electrode catalyst was thus obtained. Table 1 describes the values of x and y in the chemical formula BaₐZr_{1-x-y}YbₓFe_{y}O_{3-δ} calculated from the starting materials.

### (X-ray diffraction of electrode catalyst)

The crystal structure of the electrode catalyst obtained was analyzed with X-ray diffractometer "SmartLab" (manufactured by Rigaku Corporation). Specifically, CuKα radiation was used as the X-ray source, and the electrode catalyst obtained was irradiated with the X-ray by a parallel beam method. The analysis confirmed that the synthesized oxide had the desired composition based on known peaks of BaZrO₃ (database: JCPDS 00-006-0399).

### (Production of membrane-electrode assembly)

Next, a method for producing a membrane-electrode assembly will be described.

First, an electrolyte membrane was prepared using BaZr_{0.8}Yb_{0.2}O_{2.9}. Approximately 10 g of the electrolyte material BaZr_{0.8}Yb_{0.2}O_{2.9} was introduced into a powder compaction die (having a diameter of 25 mm). Next, the electrolyte material BaZr_{0.8}Yb_{0.2}O_{2.9} was pressed into a cylindrical shape using a hydraulic pump to give a pellet. The pellet obtained was placed into a bag and packed. The bag containing the pellet was pressurized by a cold isostatic pressing (namely, "CIP") method at 200 MPa for 3 minutes. A compact was thus obtained. The compact obtained was heat-treated in an air atmosphere at 1750°C for 24 hours to give a sintered product. The sintered product obtained was polished with a lapping film (manufactured by 3M Company) having a grain size of 15 microns. After being polished, the sintered product had a thickness of about 500 µm. An electrolyte membrane was thus produced. The electrolyte membrane had two main surfaces (namely, a first main surface and a second main surface).

Next, a first electrode was prepared. The electrode catalyst produced as described above was pulverized with a planetary ball mill (manufactured by Fritsch) for use in the preparation of the first electrode. The electrode catalyst was crushed with zirconia balls (2 mm φ). Butyl acetate was used as a solvent. The planetary ball mill was operated at 350 rpm for 120 minutes. Subsequently, the powder of the electrode catalyst was filtered out from the zirconia balls and the butyl acetate solvent, and was dried. Thus, a powder of the electrode catalyst was obtained. The grain size distribution of the electrode catalyst powder obtained was measured with a grain size distribution analyzer (product name: MT3300EX II, manufactured by Microtrac). The value of median diameter D50 of the electrode catalyst powder was about 0.3 µm. The median diameter D50 means the particle size at 50% cumulative volume in the volume-based grain size distribution.

Subsequently, a paste containing the electrode catalyst was prepared as follows in order to apply the electrode catalyst powder into a film.

The following materials were provided as starting materials for the paste.
·Electrode catalyst powder 10 g
·EC vehicle (manufactured by NISSIN-KASEI CO., LTD.) 6.7 g

The electrode catalyst and the EC vehicle were added to a plastic container. The container was shaken using a planetary mixer at 1000 rpm for 5 minutes. A paste precursor was thus obtained. The paste precursor obtained was dispersed using a three-roll mill (product name: BR-100VIII, manufactured by AIMEX CO., Ltd.). An electrode dispersion was thus obtained.

The electrode dispersion obtained was printed by a screen printing method onto the center of the first main surface of the electrolyte membrane produced as described hereinabove. The first electrode thus produced was circular and had a diameter of 10 mm. A membrane-electrode assembly was thus produced.

### (Fabrication of evaluation cell)

Next, a method will be described for the fabrication of an evaluation cell for evaluating the electrode activity.

First, an evaluation membrane-electrode assembly was produced using the membrane-electrode assembly produced by the method described hereinabove.

The electrode dispersion was printed also onto the second main surface of the electrolyte membrane constituting the membrane-electrode assembly. Next, the membrane-electrode assembly on which the electrode dispersion was printed was heat-treated in an air atmosphere at 1100°C (hereinafter, referred to as the "electrode baking temperature") for 2 hours. An evaluation membrane-electrode assembly was thus obtained.

Next, an evaluation cell was fabricated using the evaluation membrane-electrode assembly obtained. A technique described below was adopted to evaluate the electrode activity of the evaluation membrane-electrode assembly that was fabricated. The following were provided for the fabrication of an evaluation cell.
·Evaluation membrane-electrode assembly
·Silver ink (manufactured by TOYO Corporation)

The silver ink was printed by a screen printing method onto the electrodes on both sides of the evaluation membrane-electrode assembly. An evaluation cell precursor was thus obtained. The silver ink that was printed had a diameter of 10 mm. The evaluation cell precursor obtained was heat-treated in an air atmosphere at 800°C for 1 hour. An evaluation cell was thus fabricated.

### (Measurement of reaction resistance using evaluation cell)

The reaction resistance of the evaluation cell was measured.

Air that had been humidified so that the dew point temperature would be 20°C was flowed (flow rate: 100 mL/min) through the evaluation cell, and the reaction resistance of the evaluation cell was measured based on an AC impedance method performed at a temperature of 600°C.

Specifically, using ModuLab XM ECS (manufactured by Solartron Analytical), AC signals with an amplitude of 10 mV were applied to the cell in the range of 1 MHz to 0.01 Hz. With respect to the arc drawn in the Nyquist plot in the range of frequencies of about 100 kHz to 0.01 Hz, a real number was obtained from the intersection of the arc and the real axis on the high frequency side to the end on the low frequency side. In a fuel cell, the reaction resistance acquired by the AC impedance method usually shows two separate semicircular waveforms for the positive electrode and the negative electrode. The evaluation cell used in this measurement, however, had the same materials on both sides. Therefore, the results obtained in this measurement are an overlap of the current responses of the air electrodes. Thus, the real number was halved to consider the electrode activity per side, and the halved real number was taken as the reaction resistance. Incidentally, the reaction resistance is an energy loss required for electron transfer in an electrochemical reaction at an electrode. The resistance that was calculated probably had correlation with the activity of the electrode. Thus, the electrode activity was evaluated as good or poor based on the magnitude of the resistance calculated.

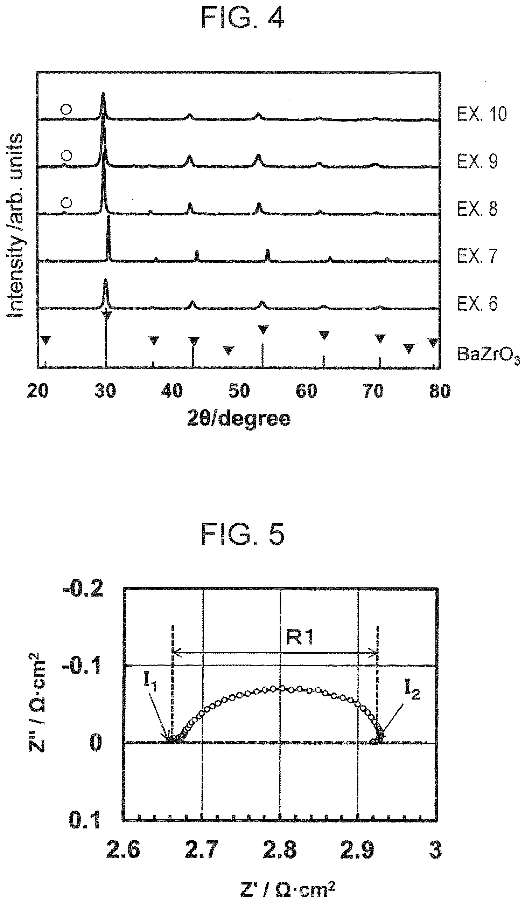

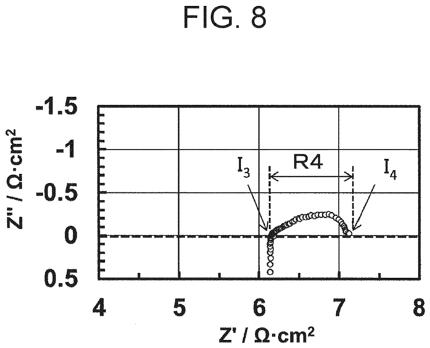

The following is a reference to the specific procedures for evaluating the reaction resi stance.
(i) When the arc drawn in the Nyquist plot in the range of frequencies of about 100 kHz to 0.01 Hz had no intersection of the arc and the real axis on the high frequency side:
   A real number (for example, R₁ in Fig. 5) was obtained from the minimum point of the arc (for example, I₁ in Fig. 5) to the end on the low frequency side (for example, I₂ in Fig. 5). The real number was halved. The halved real number was taken as the reaction resistance.
(ii) When the arc drawn in the Nyquist plot in the range of frequencies of about 100 kHz to 0.01 Hz had an intersection of the arc and the real axis on the high frequency side (for example, I₃ illustrated in Fig. 8):
   A real number (for example, R₄ illustrated in Fig. 8) was obtained from the intersection of the arc and the real axis on the high frequency side to the end on the low frequency side (for example, I₄ illustrated in Fig. 8). The real number was halved. The halved real number was taken as the reaction resistance.

### [EXAMPLE 2]

In EXAMPLE 2, an electrode catalyst, a membrane-electrode assembly, and an evaluation cell were produced, and the crystal structure of the electrode catalyst was analyzed in the same manner as in EXAMPLE 1 except for the following item (1).
(1) The starting materials for the electrode catalyst were changed to the following materials and solutions.
   ·BₐCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (91.8 mL; amount of Zr = 0.045 mol)
   ·Yb solution (2.75 mL; amount of Yb = 0.0025 mol, amount of citric acid = 0.008 mol)
   ·Fe solution (2.84 mL; amount of Fe = 0.0025 mol, amount of citric acid = 0.008 mol)
   ·Citric acid solution (90.6 mL; amount of citric acid = 0.257 mol)
   ·Ethylene glycol (2 mol)

### [EXAMPLE 3]

In EXAMPLE 3, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (58.7 mL; amount of Zr = 0.0288 mol)
   ·Yb solution (2.75 mL; amount of Yb = 0.0025 mol, amount of citric acid = 0.008 mol)
   ·Fe solution (21.3 mL; amount of Fe = 0.0188 mol, amount of citric acid = 0.061 mol)
   ·Citric acid solution (72.1 mL; amount of citric acid = 0.205 mol)
   ·Ethylene glycol (2 mol)

### [EXAMPLE 4]

In EXAMPLE 4, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (5.1 mL; amount of Zr = 0.0025 mol)
   ·Yb solution (2.8 mL; amount of Yb = 0.0025 mol, amount of citric acid = 0.008 mol)
   ·Fe solution (51.1 mL; amount of Fe = 0.045 mol, amount of citric acid = 0.145 mol)
   ·Citric acid solution (42.3 mL; amount of citric acid = 0.120 mol)
   ·Ethylene glycol (2 mol)

### [EXAMPLE 5]

In EXAMPLE 5, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (12.8 mL; amount of Zr = 0.0063 mol)
   ·Yb solution (6.9 mL; amount of Yb = 0.0063 mol, amount of citric acid = 0.02 mol) ·Fe solution (42.6 mL; amount of Fe = 0.0375 mol, amount of citric acid = 0.121 mol)
   ·Citric acid solution (46.7 mL; amount of citric acid = 0.133 mol)
   ·Ethylene glycol (2 mol)

### [EXAMPLE 6]

In EXAMPLE 6, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (63.8 mL; amount of Zr = 0.0313 mol)
   ·Yb solution (13.7 mL; amount of Yb = 0.0125 mol, amount of citric acid = 0.039 mol)
   ·Fe solution (7.1 mL; amount of Fe = 0.0063 mol, amount of citric acid = 0.020 mol)
   ·Citric acid solution (75.3 mL; amount of citric acid = 0.214 mol)
   ·Ethylene glycol (2 mol)

### [EXAMPLE 7]

In EXAMPLE 7, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (12.8 mL; amount of Zr = 0.0063 mol)
   ·Yb solution (13.7 mL; amount of Yb = 0.0125 mol, amount of citric acid = 0.039 mol)
   ·Fe solution (35.5 mL; amount of Fe = 0.0313 mol, amount of citric acid = 0.101 mol)
   ·Citric acid solution (46.9 mL; amount of citric acid = 0.133 mol)
   ·Ethylene glycol (2 mol)

### [EXAMPLE 8]

In EXAMPLE 8, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (12.8 mL; amount of Zr = 0.0063 mol)
   ·Yb solution (20.6 mL; amount of Yb = 0.0188 mol, amount of citric acid = 0.059 mol)
   ·Fe solution (28.4 mL; amount of Fe = 0.025 mol, amount of citric acid = 0.081 mol)
   ·Citric acid solution (47.2 mL; amount of citric acid = 0.134 mol)
   ·Ethylene glycol (2 mol)

### [EXAMPLE 9]

In EXAMPLE 9, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (45.9 mL; amount of Zr = 0.0225 mol)
   ·Yb solution (27.5 mL; amount of Yb = 0.025 mol, amount of citric acid = 0.078 mol)
   ·Fe solution (2.8 mL; amount of Fe = 0.0025 mol, amount of citric acid = 0.008 mol)
   ·Citric acid solution (65.9 mL; amount of citric acid = 0.187 mol)
   ·Ethylene glycol (2 mol)

### [EXAMPLE 10]

In EXAMPLE 10, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following item (1).
(1) The starting materials for the electrode catalyst were changed to the following materials and solutions.
   ·BaCO₃ (0.05 mol, manufactured by KANTO CHEMICAL CO., INC.)
   ·C₆H₈O₇·H₂O (0.227 mol, manufactured by KANTO CHEMICAL CO., INC.)
   ·Zr solution (38.3 mL; amount of Zr = 0.0188 mol)
   ·Yb solution (27.5 mL; amount of Yb = 0.025 mol, amount of citric acid = 0.078 mol)
   ·Fe solution (7.1 mL; amount of Fe = 0.0063 mol, amount of citric acid = 0.020 mol)
   ·Citric acid solution (61.6 mL; amount of citric acid = 0.175 mol)
   ·Ethylene glycol (2 mol)

### [COMPARATIVE EXAMPLE 1]

In COMPARATIVE EXAMPLE 1, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following items (1) and (2).
(1) The starting materials for the electrode catalyst were changed to the following materials.
   ·BaCO₃ (0.200 mol, manufactured by KANTO CHEMICAL CO., INC.)
   ·ZrO₂ (0.160 mol, manufactured by KANTO CHEMICAL CO., INC.)
   ·Yb₂O₃ (0.010 mol, manufactured by Kojundo Chemical Laboratory Co., Ltd.)
(2) The procedure for synthesizing the electrode catalyst was changed as follows.

The above starting materials and 50 mL of distilled water were added to a 250 mL container. Next, the container was shaken using a planetary ball mill (manufactured by Fritsch) at 200 rpm for 10 minutes. This shaking operation was repeated twice. A mixture liquid was thus obtained. The mixture liquid obtained was dried in a dryer (MOV-212F, manufactured by Panasonic Corporation) at 120°C for 6 hours to remove water from the mixture liquid. A solid was thus obtained. The solid obtained was crushed in a mortar, and the resultant powder was transferred to an alumina crucible (manufactured by NIKKATO CORPORATION). The alumina crucible was then heat-treated in an air atmosphere at a temperature of 1400°C for 2 hours. An electrode catalyst was thus obtained.

### [COMPARATIVE EXAMPLE 2]

In COMPARATIVE EXAMPLE 2, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following items (1) and (2).
(1) The starting materials for the electrode catalyst were changed to the following materials.
   ·BaCO₃ (0.200 mol, manufactured by KANTO CHEMICAL CO., INC.)
   ·ZrO₂ (0.160 mol, manufactured by KANTO CHEMICAL CO., INC.)
   ·Yb₂O₃ (0.020 mol, manufactured by Kojundo Chemical Laboratory Co., Ltd.)
(2) The procedure for synthesizing the electrode catalyst was changed as follows.

The above starting materials and 50 mL of distilled water were added to a 250 mL container. Next, the container was shaken using a planetary ball mill (manufactured by Fritsch) at 200 rpm for 10 minutes. This shaking operation was repeated twice. A mixture liquid was thus obtained. The mixture liquid obtained was dried in a dryer (MOV-212F, manufactured by Panasonic Corporation) at 120°C for 6 hours to remove water from the mixture liquid. A solid was thus obtained. The solid obtained was crushed in a mortar, and the resultant powder was transferred to an alumina crucible (manufactured by NIKKATO CORPORATION). The alumina crucible was then heat-treated in an air atmosphere at a temperature of 1400°C for 2 hours. An electrode catalyst was thus obtained.

### [COMPARATIVE EXAMPLE 3]

In COMPARATIVE EXAMPLE 3, an electrode catalyst, a membrane-electrode assembly, and an evaluation cell were produced, the crystal structure of the electrode catalyst was analyzed, and the reaction resistance of the evaluation cell was measured in the same manner as in EXAMPLE 1 except for the following items (1) and (2).
(1) The starting materials for the electrode catalyst were changed to the following material.
   ·La_{0.6}Sr_{0.4}Co_{0.2}Fe_{0.8}O_{3-δ} (manufactured by KUSAKA RARE METAL PRODUCTS CO., LTD.)
(2) The heat treatment of the electrode catalyst was performed at 950°C.

### (Experimental results and discussion)

### (X-ray diffraction profiles and identification of synthesized compounds)

X-ray diffraction profiles of the electrode catalysts of EXAMPLES 1 to 10, and the compounds synthesized will be discussed with reference to Fig. 3 and Fig. 4.

Fig. 3 is a graph illustrating X-ray diffraction profiles of the electrode catalysts of EXAMPLES 1 to 5. Fig. 4 is a graph illustrating X-ray diffraction profiles of the electrode catalysts of EXAMPLES 6 to 10. In Fig. 3 and Fig. 4, the abscissa and the ordinate indicate the diffraction angle (namely, 2θ) and the X-ray intensity, respectively.

As illustrated in Fig. 3 and Fig. 4, the peaks of the electrode catalysts of EXAMPLE 1 to EXAMPLE 10 were similar to the peaks assigned to BaZrO₃ having a perovskite structure (database: ICDD, see the black down-pointing triangles in Fig. 3). In other words, the peaks of the electrode catalysts produced by the method according to EXAMPLE 1 to EXAMPLE 10 had shifts of about +3 degrees at a maximum from the peaks assigned to BaZrO₃. These shifts probably stem from the solid dissolution of Fe and Yb in the starting materials into the crystals of BaZrO₃. Furthermore, the profiles of EXAMPLE 8 to EXAMPLE 10 contained peaks (open circles in Fig. 4) assigned to trace amounts of BaCO₃ that were probably derived from the starting materials. It was thus revealed that the electrode catalysts of EXAMPLE 1 to EXAMPLE 10, apart from trace amounts of impurities derived from the starting materials, were each composed of a compound with a perovskite-type structure represented by BaₐZr_{1-x-y}YbₓFe_{y}O_{3-δ}, namely, composed of a single compound. As illustrated in Fig. 3 and Fig. 4, the peaks assigned to BaZrO₃ that were used were peaks at 2θ = 21.1, 30.1, 37.1, 43.1, 48.5, 53.5, 62.6, 71.0, 75.1, and 79.0, specifically, ten peaks assigned to BaZrO3.

### (Evaluation of reaction resistance of cells of EXAMPLE 1 and COMPARATIVE EXAMPLES 1 and 2)

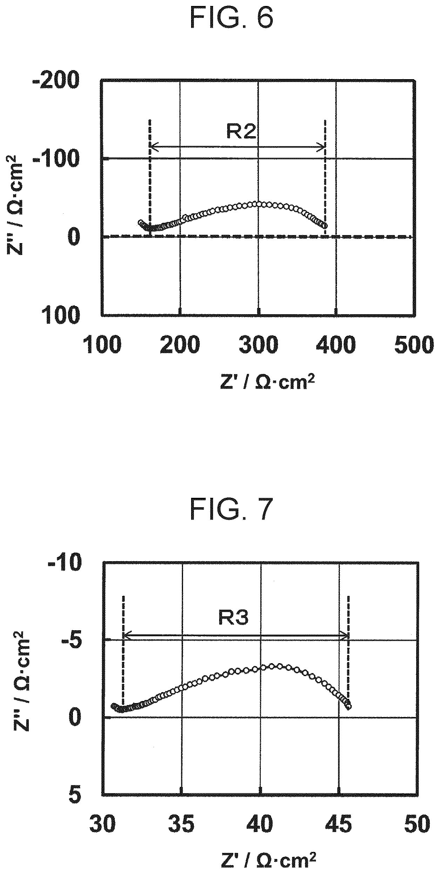

The results of the evaluation of the reaction resistance of the cells of EXAMPLE 1 and COMPARATIVE EXAMPLE 1 will be discussed with reference to Fig. 5 and Fig. 6.

Fig. 5 illustrates a Nyquist plot of the evaluation cell using the electrode catalyst of EXAMPLE 1. Fig. 6 illustrates a Nyquist plot of the evaluation cell using the electrode catalyst of COMPARATIVE EXAMPLE 1. Specifically, Fig. 5 and Fig. 6 illustrate Nyquist plot data obtained by testing the cells of EXAMPLE 1 and COMPARATIVE EXAMPLE 1 by an AC impedance method, respectively.

As illustrated in Fig. 5, a real number (R1 in Fig. 5) was determined from the minimum point of the arc in the Nyquist plot (see I₁ in Fig. 5) to the end on the low frequency side (see I₂ in Fig. 5). The real number R1 was halved to give the reaction resistance (unit: Ωcm²).

Furthermore, as illustrated in Fig. 6, a real number (see R2 in Fig. 6) was calculated from the minimum point of the arc in the Nyquist plot of COMPARATIVE EXAMPLE 1 to the end on the low frequency side. The real number R2 was halved to give the reaction resistance.

From the reading of Fig. 5 and Fig. 6, the reaction resistance of the cell of EXAMPLE 1 is clearly lower than that of the cell of COMPARATIVE EXAMPLE 1. That is, the electrode in the cell of EXAMPLE 1 has an excellent performance. The reason behind this is probably because Fe contained in the electrode catalyst of EXAMPLE 1 functioned as an electrode active site.

The reaction resistance calculated in the similar manner from the Nyquist plot of COMPARATIVE EXAMPLE 2 (the halved value of the real number R3 in Fig. 7) was 7.21 Ωcm² and was higher than the reaction resistance read from Fig. 5.

As discussed above, the addition of Fe to a compound represented by the chemical formula BaₐZr₁₋ₓYbₓO_{3-δ} (where 0.95 ≤ a ≤ 1.05, 0 < x < 1, and 0 < δ < 0.5) that is a conventional proton conductive electrolyte material will result in an electrode catalyst offering advantageous effects.

### (Evaluation of reaction resistance of cells of EXAMPLE 1 and COMPARATIVE

### EXAMPLE 3)

The results of the evaluation of the reaction resistance of the cells of EXAMPLE 1 and COMPARATIVE EXAMPLE 3 will be discussed with reference to Fig. 5, Fig. 8, and Table 1.

Fig. 8 illustrates a Nyquist plot of the evaluation cell using the electrode catalyst of COMPARATIVE EXAMPLE 3. Specifically, Fig. 8 illustrates Nyquist plot data obtained by testing the cell of COMPARATIVE EXAMPLE 3 by an AC impedance method. The electrode catalyst of COMPARATIVE EXAMPLE 3 is an oxide ion-electron mixed conductor known to have excellent electrode activity. The electrode catalyst of COMPARATIVE EXAMPLE 3 is a material frequently used in an SOFC air electrode.

In the Nyquist plot of the cell of COMPARATIVE EXAMPLE 3, the values of resistance showed a tendency to draw a semicircle as the frequency of the applied AC signals was changed from high frequency to low frequency.

The reaction resistance of the cell of EXAMPLE 1 was 0.13 Ωcm². On the other hand, the reaction resistance of the cell of COMPARATIVE EXAMPLE 3 was 0.49 Ωcm². The reaction resistance of the cell of EXAMPLE 1 was lower than the reaction resistance of the cell of COMPARATIVE EXAMPLE 3. Thus, the use of the cell of EXAMPLE 1 is expected to offer high electrode activity in various electrochemical devices. The electrode catalyst of EXAMPLE 1 is expected to offer a high output when used in a fuel cell.

### (Summary and discussion)

The evaluation results of the cells of EXAMPLES 1 to 10 and COMPARATIVE EXAMPLES 1 to 3 will be discussed with reference to Table 1.

As described in Table 1, the electrode catalysts that included a compound represented by the chemical formula BaₐZr_{1-x-y}YbₓFe_{y}O_{3-δ} (where 0.95 ≤ a ≤ 1.05, 0 < x < 1, 0 < y < 1, (x + y) < 1, and 0 < δ < 1) were synthesized as electrode catalysts composed of the above compound as a single compound, depending on the values of x and y. Depending on the composition, the electrode catalysts that included a compound represented by the chemical formula BaₐZr_{1-x-y}YbₓFe_{y}O_{3-δ} (0.95 ≤ a ≤ 1.05, 0 < x < 1, 0 < y < 1, (x + y) < 1, and 0 < δ < 1) had a reaction resistance lower than the reaction resistance of the electrode catalyst of COMPARATIVE EXAMPLE 3. Specifically, it has been found that the electrode catalyst of the present disclosure may achieve a lower reaction resistance than the conventional electrode catalyst having an excellent electrode activity as an oxide ion-electron mixed conductor. More specifically, the values of reaction resistance of the electrode catalysts of EXAMPLE 1 and EXAMPLE 3 to EXAMPLE 7 were lower than the reaction resistance of the electrode catalyst of COMPARATIVE EXAMPLE 3. The reason is probably because the electrode catalysts of EXAMPLE 1 and EXAMPLE 3 to EXAMPLE 7 are proton-electron mixed conductors. In the evaluation of the reaction resistance, the material used for the electrolyte membrane was a proton conductive material, specifically, BaZr_{0.8}Yb_{0.2}O_{3-δ} (where 0 < δ < 0.5). When this electrolyte membrane is used in combination with an electrode material having no proton conductivity as is the case in COMPARATIVE EXAMPLE 3, the region where the reaction proceeds is the interface at which electrons conducted through the electrode, protons conducted through the electrolyte membrane, and oxygen gas come into contact with one another (that is, the three-phase interface). For example, the oxygen gas that is used here may be oxygen gas derived from air or may be a synthetic gas obtained by mixing oxygen and other gas, such as nitrogen, in any ratio. When, on the other hand, the electrode catalyst has proton conductivity, the reaction also proceeds at the surface of the electrode particles (that is, also at the two-phase interface). Provided that the cell sizes are the same, the area of the three-phase interface is generally smaller than the area of the two-phase interface. Thus, as is the case in EXAMPLE 1, the electrode catalyst of the present disclosure used in a cell including a proton conductive electrolyte membrane allows the cell to exhibit a superior electrode performance. The use of cells including the electrode catalysts of EXAMPLE 1 and EXAMPLE 3 to EXAMPLE 7 is expected to offer a high electrode activity in various electrochemical devices. The electrode catalysts of EXAMPLE 1 and EXAMPLE 3 to EXAMPLE 7 are expected to offer a high output when used in a fuel cell.

In the embodiments and EXAMPLES described hereinabove, the values of x and y indicate the amounts added and may differ from the measured values by a margin of error of greater than or equal to -0.02 and less than or equal to +0.02. That is, the ranges of the values of x and y described hereinabove may have a margin of error of greater than or equal to -0.02 and less than or equal to +0.02. The measured values may be obtained by, for example, analyzing a measurement sample by ICP emission spectroscopy. The measurement sample that is used may be, for example, one obtained by weighing a sample for the value of x or y, adding hydrochloric acid and nitric acid, microwaving the mixture until the sample is dissolved, and diluting the solution with ion-exchanged water to a predetermined volume.

The electrode catalysts used in EXAMPLES 1 to 10 were composed of a compound represented by the chemical formula BaₐZr_{1-x-y}YbₓFe_{y}O_{3-δ} in which a = 1. As described hereinabove, the electrode catalysts of EXAMPLES 1 to 10 were demonstrated to exhibit an excellent performance as an electrode. Here, perovskite-type (namely, ABO₃-type) compounds are known as being highly stable crystal structures, and being capable of maintaining the crystal structure and exhibiting substantially similar characteristics even when the A:B molar ratio is out of the stoichiometric composition. BaZrO₃ perovskite-type compounds too can maintain the crystal structure and exhibit substantially similar characteristics even when the compositional ratio deviates from stoichiometric by about ±5%. Thus, the electrode catalysts can exhibit an excellent performance as an electrode similarly to the results of EXAMPLES 1 to 10 even when the composition of the compound used in EXAMPLES 1 to 10 has a change in the value of a in the range of 0.95 ≤ a ≤ 1.05.

**[Table 1]**

| | Compound | | | Reaction resistance [Ωcm²] |
|---|---|---|---|---|
| | Composition | Value of x | Value of y | |
| EX. 1 | BaZr_{0.375}Yb_{0.125}Fe_{0.5}O_{3-δ} | 0.125 | 0.500 | 0.13 |
| EX. 2 | BaZr_{0.9}Yb_{0.05}Fe_{0.05}O_{3-δ} | 0.050 | 0.050 | 3.93 |
| EX. 3 | BaZr_{0.575}Yb_{0.05}Fe_{0.375}O_{3-δ} | 0.050 | 0.375 | 0.47 |
| EX. 4 | BaZr_{0.05}Yb_{0.05}Fe_{0.9}O_{3-δ} | 0.050 | 0.900 | 0.20 |
| EX. 5 | BaZr_{0.175}Yb_{0.125}Fe_{0.75}O_{3-δ} | 0.125 | 0.750 | 0.20 |
| EX. 6 | BaZr_{0.625}Yb_{0.25}Fe_{0.125}O_{3-δ} | 0.250 | 0.125 | 0.39 |
| EX. 7 | BaZr_{0.125}Yb_{0.25}Fe_{0.625}O_{3-δ} | 0.250 | 0.625 | 0.18 |
| EX. 8 | BaZr_{0.125}Yb_{0.375}Fe_{0.5}O_{3-δ} | 0.375 | 0.500 | 0.61 |
| EX. 9 | BaZr_{0.45}Yb_{0.5}Fe_{0.05}O_{3-δ} | 0.500 | 0.050 | 1.57 |
| EX. 10 | BaZr_{0.375}Yb_{0.5}Fe_{0.125}O_{3-δ} | 0.500 | 0.125 | 0.79 |
| COMP. EX. 1 | BaZr_{0.8}Yb_{0.1}O_{3-δ} | - | - | 110.8 |
| COMP. EX. 2 | BaZr_{0.8}Yb_{0.2}O_{3-δ} | - | - | 7.21 |
| COMP. EX. 3 | La_{0.6}Sr_{0.4}Co_{0.2}Fe_{0.8}O_{3-δ} | - | - | 0.49 |

### Industrial Applicability

The electrode catalyst according to the present disclosure is suited for a system using an electrochemical cell, such as a hydrogen generation system or a fuel cell system. The electrode catalyst according to the present disclosure may also be used in an electrochemical hydrogen pump, such as a hydrogen purifier or a hydrogen compressor.

### Reference Signs List

10 membrane-electrode assembly
11 electrolyte membrane
12a first main surface
12 first electrode
13 second electrode
20 electrochemical cell
30 stack
1000 fuel cell system
1014 housing
1021 oxidant gas supply device
1022 raw material supply device
1023 raw material gas line
1024 oxidant gas line

## Claims

1. An electrode catalyst comprising:
a compound represented by the chemical formula BaₐZr_{1-x-y}YbₓFe_{y}O_{3-δ},
the chemical formula satisfying 0.95 ≤ a ≤ 1.05, 0 < x < 1, 0 < y < 1, 0 < (x + y) < 1, and 0 < δ < 1.

2. The electrode catalyst according to claim 1, wherein
the chemical formula satisfies x ≤ 0.5 and y _> 0.05.

3. The electrode catalyst according to claim 1 or 2, wherein
the chemical formula satisfies x ≤ 0.25 and y ≥ 0.125.

4. The electrode catalyst according to any one of claims 1 to 3, wherein
the chemical formula satisfies y > 0.4.

5. The electrode catalyst according to any one of claims 1 to 4, wherein
the chemical formula satisfies y _> 0.5.

6. The electrode catalyst according to any one of claims 1 to 5, wherein
the chemical formula satisfies y ≤ 0.9.

7. The electrode catalyst according to any one of claims 1 to 6, wherein
the chemical formula satisfies y < 0.75.

8. The electrode catalyst according to any one of claims 1 to 7, wherein
the electrode catalyst is composed of the compound.

9. A membrane-electrode assembly comprising:
a first electrode comprising, as an electrode catalyst, an oxide containing Ba, Zr, Yb, and Fe; and an electrolyte membrane.

10. The membrane-electrode assembly according to claim 9, wherein
the electrolyte membrane is disposed on a first main surface of the first electrode.

11. The membrane-electrode assembly according to claim 9 or 10, wherein
the oxide comprises a compound represented by the chemical formula BaₐZr_{1-x-y}YbₓFe_{y}O_{3-δ}, and
the chemical formula satisfies 0.95 ≤ a ≤ 1.05, 0 < x < 1, 0 < y < 1, 0 < (x + y) < 1, and 0 < δ < 1.

12. The membrane-electrode assembly according to claim 11, wherein
the chemical formula satisfies x ≤ 0.5 and y ≥ 0.05.

13. The membrane-electrode assembly according to claim 11 or 12, wherein
the chemical formula satisfies x ≤ 0.25 and y ≥ 0.125.

14. The membrane-electrode assembly according to any one of claims 11 to 13, wherein
the chemical formula satisfies y > 0.4.

15. The membrane-electrode assembly according to any one of claims 11 to 14, wherein
the chemical formula satisfies y _> 0.5.

16. The membrane-electrode assembly according to any one of claims 11 to 15, wherein
the chemical formula satisfies y ≤ 0.9.

17. The membrane-electrode assembly according to any one of claims 11 to 16, wherein
the chemical formula satisfies y ≤ 0.75.

18. The membrane-electrode assembly according to any one of claims 9 to 17, wherein
the electrolyte membrane comprises at least one selected from the group consisting of compounds represented by the chemical formula Baₐ₁Zr₁₋ₓ₁M1ₓ₁O_{3-δ1}, compounds represented by the chemical formula Baₐ₂Ce₁₋ₓ₂M2ₓ₂O_{3-δ2}, and compounds represented by the chemical formula Baₐ₃Zr_{1-x3-y3}Ceₓ₃M3_{y3}O_{3-δ3},
M1, M2, and M3 each include at least one selected from the group consisting of Pr, Nd, Pm, Sm, Eu, Gd, Tb, Dy, Ho, Er, Tm, Yb, Y, Sc, In, and Lu, and
the chemical formulas satisfy 0.95 ≤ a1 ≤ 1.05, 0.95 ≤ a2 ≤ 1.05, 0.95 ≤ a3 ≤ 1.05, 0 < x1 < 1, 0 < x2 < 1,0 < x3 < 1,0 < y3 < 1, 0 < δ1 < 0.5, 0 < δ2 < 0.5, and 0 < δ3 < 0.5.

19. The membrane-electrode assembly according to claim 18, wherein
M1 is Yb.

20. An electrochemical cell comprising:
the membrane-electrode assembly described in any one of claims 9 to 19; and a second electrode,
the first electrode, the electrolyte membrane, and the second electrode being arranged in the order named.

21. The electrochemical cell according to claim 20, wherein
the second electrode comprises at least one selected from the group consisting of NiO and Ni.

22. A fuel cell system comprising:
the electrochemical cell described in claim 20 or 21;
an oxidant gas supply line; and
a raw material gas supply line, wherein
the first electrode is connected to the oxidant gas supply line, and
the second electrode is connected to the raw material gas supply line.

23. An electric power generating method comprising:
supplying an oxidant gas to the oxidant gas supply line of the fuel cell system described in claim 22, and supplying a raw material gas to the raw material gas supply line, thereby generating electric power.
